# EUROPÄISCHE PATENTSCHRIFT

(11) **EP 1 352 301 B1**
(45) Veröffentlichungstag und Bekanntmachung des Hinweises auf die Patenterteilung: **14.12.2005**
(21) Anmeldenummer: 01993849.7
(22) Anmeldetag: 08.11.2001
(51) Int. Cl.: G05B 24/00, G09F 19/18

(54) **VERFAHREN ZUM STEUERN VON GERÄTEN**
METHOD FOR CONTROLLING DEVICES
PROCEDE DE COMMANDE D'APPAREILS

(30) Priorität: 10.11.2000 LU 90675
(43) Veröffentlichungstag der Anmeldung: 15.10.2003
(73) Patentinhaber: IEE INTERNATIONAL ELECTRONICS & ENGINEERING S.A., 6468 Echternach (LU)
(72) Erfinder: SCHOCKMEL, Paul, 8216 MAMER (LU); BECKER, Guido, 66679 LOSHEIM (DE)
(74) Vertreter: Beissel, Jean
(86) Internationale Anmeldenummer: PCT/EP2001/012936
(87) Internationale Veröffentlichungsnummer: WO 2002/039200

(56) Entgegenhaltungen:
- DE-A- 19 918 633
- FR-A- 2 779 559
- US-A- 5 803 738

## Beschreibung

### Einleitung

Die vorliegende Erfindung betrifft ein Verfahren zum Steuern von Geräten, Maschinen und/oder Fahrzeugen, bzw. von Anwendungen in Fahrzeugen.

Die zunehmende Funktionsvielfalt von modernen Geräten, Maschinen oder Fahrzeugen verlangt nach immer komplexeren Bedienungsfeldern, um die Vielzahl der in dem Gerät vereinten Funktionen zu bedienen. Das Problem bei der Konzeption solcher Bedienungsfelder liegt in den oft widersprüchlichen Anforderungen einerseits an die Ergonomie der Bedienüngsflächen und andererseits an den Platzbedarf bzw. Designvorgaben.

Um den Anforderungen an einen geringeren Platzbedarf zu genügen, geht man häufig dazu über, die einzelnen Bedienungselemente der Bedienungsfelder mit mehreren auswählbaren Funktionen zu belegen. Hierdurch kann die Anzahl der für die Bedienung einer bestimmten Anzahl von Funktionen benötigten Bedienungselemente wesentlich reduziert werden, so dass der Platzbedarf des Bedienungsfeldes auf ein Minimum reduziert werden kann. Allerdings leidet unter einer solchen Ausgestaltung des Bedienungsfeldes der Bedienkömfort des Gerätes bzw. der Maschine, da vor dem Ausführen einer gewünschten Funktion, diese zunächst aus der Vielzahl der dem jeweiligen Bedienungselement zugeordneten Funktionen ausgewählt werden muss, bevor die eigentliche Steuerung der Funktion möglich wird. Darüber hinaus ist ein derartiges Bedienungsfeld gänzlich ungeeignet zum Schalten von sicherheitsrelevanten Funktionen von Maschinen oder Geräten, bei denen es im allgemeinen auf eine schnelle Reaktionszeit des Bedienungspersonals ankommt.

Aus der DE-A-199 18 633 ist ein Verfahren zum Steuern von Geräten, Maschinen und/oder Fahrzeugen bekannt, mit den Verfahrensschritten: Projizieren eines einer bestimmten Funktion zugeordneten virtuellen Bedienungselementes in den Aktionsbereich einer Bedienungsperson; berührungsloses Erfassen einer Bewegung der Bedienungsperson in Richtung des virtuellen Bedienungselementes, wobei das berührungslose Erfassen mittels eines bildgebenden Systems erfolgt; und Schalten der dem virtuellen Bedienungselement zugeordneten Funktion, nachdem die Bewegung der Bedienperson als Schaltabsicht erkannt ist. Bei diesem Verfahren wird eine virtuelle Schaltfläche auf eine definierte Projektionsfläche projiziert und das Vorhandensein eines bestimmten Körperteils einer Bedienperson im unmittelbaren Bereich der virtuellen Schaltfläche detektiert und als Schaltabsicht gewertet. Die Auswertung der Schaltabsicht erfolgt mittels einer 2D Kamera, mit der eine Objekterkennung in einer Ebene unmittelbar vor der Projektionsfläche durchgeführt wird. Ist der Körperteil, z.B. ein Finger oder die Hand, mittels Objekterkennung in unmittelbarer Nähe der virtuellen Schaltfläche identifiziert, wird die der Schaltfläche zugeordnete Schaltfunktion ausgeführt.

### Aufgabe der Erfindung

Aufgabe der vorliegenden Erfindung ist es folglich, ein Verfahren zum Steuern von Geräten, Maschinen und/oder Fahrzeugen vorzuschlagen, das ein komfortables bzw. schnelles Steuern zumindest einzelner Funktionen ermöglicht.

### Allgemeine Beschreibung der Erfindung

Diese Aufgabe wird gelöst durch ein Verfahren zum Steuern von Geräten, Maschinen und/oder Fahrzeugen, mit den Schritten
Projizieren eines einer bestimmten Funktion zugeordneten virtuellen Bedienungselementes in den Aktionsbereich einer Bedienungsperson;
berührungsloses Erfassen einer Bewegung der Bedienungsperson in Richtung des virtuellen Bedienungselementes, wobei das berührungslose Erfassen mittels eines bildgebenden Systems erfolgt; und
Schalten der dem virtuellen Bedienungselement zugeordneten Funktion, nachdem die Bewegung der Bedienperson als Schalt- bzw. Bedienungsabsicht erkannt ist. Erfindungsgemäß umfasst das bildgebende System dabei eine 3D-Kamera.

Mit einem derartigen Verfahren zum Steuern von Geräten kann eine Vielzahl von Funktionen des Gerätes bzw. der Maschine oder des Fahrzeugs gesteuert werden, ohne dass hierfür physikalischen Schaltflächen bzw. Regler vorgesehen werden müssen. Die tatsächlich benötigten physikalischen Bedienungsfelder können demnach auf ein Minimum reduziert werden, so dass die Vorgaben bezüglich eines beschränkten Platzbedarfs leichter erfüllt werden können.

Die projizierten virtuellen Bedienungselemente können in dem Aktionsbereich der Bedienungsperson an eine beliebige, für die Bedienungsperson leicht zugängliche Stelle projiziert werden. Auf diese Weise sind diese virtuellen Bedienungselemente ergonomisch günstig anordbar und demnach komfortabel und gegebenenfalls sehr schnell erreichbar.

Möchte die Bedienungsperson die dem virtuellen Bedienungselement zugeordnete Funktion schalten, reicht es beispielsweise, den Arm in Richtung des Bedienungselementes zu bewegen. Sobald die Bewegung des Arms als Schaltabsicht erkannt wird, z.B. wenn die Bewegung eine genügend große Amplitude erreicht hat bzw. wenn ein gewisser Mindestabstand zu dem virtuellen Bedienungselement unterschritten wird, wird die Funktion von einem Prozessor geschaltet.

Es ist anzumerken, dass die virtuelle Bedienungselemente z.B. einfache Schaltflächen und/oder Schieberegler und/oder Drehregler umfassen können. Je nach Typ des Bedienungselementes müssen lediglich die Kriterien, nach denen eine von der Bedienungsperson durchgeführte Bewegung als Betätigungsabsicht bzw. als Schaltabsicht gewertet wird, angepasst werden.

Die Projektion des virtuellen Bedienungselementes kann beispielsweise auf einen vorgegebenen Hintergrund, wie z. B. einen Projektionsschirm, erfolgen. In einer besonders vorteilhaften Ausgestaltung erfolgt das Projizieren des virtuellen Bedienungselementes holographisch im Raum. Diese Ausgestaltung zeichnet sich durch eine besonders hohe Flexibilität bezüglich der Anordnung der virtuellen Bedienungselemente aus. In der Tat kann bei dieser Ausgestaltung der Bereich in den die virtuellen Bedienungselemente projiziert werden entsprechend der momentanen Position der Bedienungsperson angepasst werden.

In einer vorteilhaften Ausgestaltung der Erfindung erfolgt das Projizieren des virtuellen Bedienungselementes situationsabhängig. Dies bedeutet, dass die virtuelle Schaltfläche zu einer bestimmten Funktion des Gerätes bzw. einer Maschine oder eines Fahrzeuges nur dann projiziert wird, wenn die Betätigung der jeweiligen Funktion für die Steuerung des Gerätes nötig und/oder sinnvoll ist. Eine derartige Ausgestaltung ist insbesondere für sicherheitsrelevante Funktionen sinnvoll, indem beim Eintreten einer kritischen Situation die Schaltfläche zum Einleiten von Gegenmaßnahmen an einen der Bedienungsperson leicht zugänglichen Ort projiziert wird.

Darüber hinaus kann das Projizieren des virtuellen Bedienungselementes zeitlimitiert erfolgen, wenn beispielsweise eine bestimmte Funktion nur zeitweilig zur Verfügung stehen soll.

Eine gute Ortsauflösung bei der berührungslosen Erfassung einer Bewegung der Bedienungsperson kann durch optische Systeme erreicht werden. Solche optischen Systeme können beispielsweise in Infrarotbereich arbeiten, wobei sowohl aktive Systeme mit einem Infrarotsender und einem Empfänger als auch passive Systeme zur Erfassung der von der Bedienungsperson abgestrahlten Körperwärme zum Einsatz kommen können.

In einer besonders vorteilhaften Variante erfolgt das berührungslose Erfassen jedoch mittels bildgebender Systeme im sichtbaren Bereich. Derartige Systeme erkennen neben der Bewegung beispielsweise der Hand der Bedienungsperson auch den Hintergrund vor dem die Bewegung erfolgt. Hierdurch wird eine bessere Charakterisierung der Bewegung ermöglicht. Darüber hinaus ermöglichen diese Systeme neben der eigentlichen Erkennung einer Bewegung auch eine Objekterkennung, so dass unterschieden werden kann, ob eine Hand der Bedienungsperson zu der virtuellen Schaltfläche geht oder eventuell ihr Kopf. Hierdurch kann eine Schaltabsicht der Bedienungsperson besser und zuverlässiger detektiert werden.

Das bildgebende System kann beispielsweise eine CCD Kamera und/oder eine CMOS Kamera umfassen. Mit einer solchen Kamera können neben den Bildinformationen unter anderem sequentiell Informationen bezüglich der Entfernung des aufgenommenen Körperteils erfasst werden. Es kann demnach eine Entfernungsmessung durchgeführt werden, die eine genauere Charakterisierung der erfassten Bewegung ermöglicht.

In einer alternativen, besonders vorteilhaften Ausgestaltung umfasst das bildgebende System eine 3D-Kamera. Bei dieser Kamera werden Entfernungsinformationen gleichzeitig mit den Bildinformationen aufgenommen. Hierdurch ergibt sich eine kürzere Integrationszeit der Informationen, so dass eine schnellere Charakterisierung der erfassten Bewegung bei gleichzeitig verringerter Rechenleistung ermöglicht wird.

Es ist anzumerken, dass das oben beschrieben Verfahren in sehr unterschiedlichen Bereichen eingesetzt werden kann. So können mit einem derartigen Verfahren beispielsweise verschiedene Komfort- oder Sicherheitsfunktionen in einem Fahrzeug gesteuert werden. Alternativ kann ein solches Verfahren beispielsweise zur Steuerung von Werkzeugmaschinen oder Haushaltsgeräten eingesetzt werden.

## Patentansprüche

1. Verfahren zum Steuern von Geräten, Maschinen und/oder Fahrzeugen, mit den Schritten
Projizieren eines einer bestimmten Funktion zugeordneten virtuellen Bedienungselementes in den Aktionsbereich einer Bedienungsperson;
berührungsloses Erfassen einer Bewegung der Bedienungsperson in Richtung des virtuellen Bedienungselementes, wobei das berührungslose Erfassen mittels eines bildgebenden Systems erfolgt; und
Schalten der dem virtuellen Bedienungselement zugeordneten Funktion, nachdem die Bewegung der Bedienperson als Schaltabsicht erkannt ist,
**dadurch gekennzeichnet, dass** das bildgebende System eine 3D-Kamera umfasst.

2. Verfahren nach Anspruch 1, **dadurch gekennzeichnet, dass** das Projizieren des virtuellen Bedienungselementes optisch auf einen vorgegebenen Hintergrund erfolgt.

3. Verfahren nach Anspruch 1, **dadurch gekennzeichnet, dass** das Projizieren des virtuellen Bedienungselementes holographisch im Raum erfolgt.

4. Verfahren nach einem der Ansprüche 1 bis 3, **dadurch gekennzeichnet, dass** das Projizieren des virtuellen Bedienungselementes situationsabhängig erfolgt.

5. Verfahren nach einem der Ansprüche 1 bis 4, **dadurch gekennzeichnet, dass** das Projizieren des virtuellen Bedienungselementes zeitlimitiert erfolgt.

6. Verfahren nach einem der Ansprüche 1 bis 5, **dadurch gekennzeichnet, dass** das berührungslose Erfassen einer Bewegung der Bedienungsperson optisch erfolgt.

7. Verfahren nach Anspruch 6, **dadurch gekennzeichnet, dass** das berührungslose Erfassen im Infrarotbereich erfolgt.

8. Verfahren nach Anspruch 6, **dadurch gekennzeichnet, dass** das berührungslose Erfassen im sichtbaren Bereich erfolgt.

9. Verfahren nach einem der vorhergehenden Ansprüche, **dadurch gekennzeichnet, dass** das virtuelle Bedienungselement eine einfache Schaltfläche und/oder einen Schieberegler und/oder einen Drehregler umfasst.

## Claims

1. Method for controlling appliances, machines and/or vehicles, comprising the steps of
projecting a virtual control element assigned to a certain function into the action range of an operator;
contactless detection of a movement of the operator to the direction of the virtual control element, the contactless detection being effected by means of an imaging system; and
switching the function assigned to the virtual control element, after the operator's movement has been detected to be a switching intention,
**characterized in that** the imaging system comprises a 3D camera.

2. Method according to claim 1, **characterized in that** the projection of the virtual control element is effected optically onto a given background.

3. Method according to claim 1, **characterized in that** the projection of the virtual control element is effected holographically in the space.

4. Method according to one of claims 1 to 3, **characterized in that** the projection of the virtual control element is effected depending on the situation.

5. Method according to one of claims 1 to 4, **characterized in that** the projection of the virtual control element is effected limited in time.

6. Method according to one of claims 1 to 5, **characterized in that** the contactless detection of a movement of the operator is effected optically.

7. Method according to claim 6, **characterized in that** the contactless detection is effected in the infrared range.

8. Method according to claim 6, **characterized in that** the contactless detection is effected in the visible range.

9. Method according to one of the preceding claims, **characterized in that** the virtual control element comprises a simple command button and/or a sliding control unit and/or a variable control unit.

## Revendications

1. Procédé de commande d'appareils, de machines et/ou de véhicules, comprenant les étapes de projection d'un organe de commande virtuel affecté à une fonction déterminée dans le rayon d'action d'un opérateur; de détection sans contact d'un mouvement de l'opérateur en direction de l'organe de commande virtuel, la détection sans contact s'effectuant au moyen d'un système d'imagerie ; et de commutation de la fonction affectée à l'organe de commande virtuel, après que le mouvement de l'opérateur ait été détecté comme intention de commutation, **caractérisé en ce que** le système d'imagerie comporte une caméra 3D.

2. Procédé selon la revendication 1, **caractérisé en ce que** la projection de l'organe de commande virtuel s'effectue optiquement sur un arrière-plan prescrit.

3. Procédé selon la revendication 1, **caractérisé en ce que** la projection de l'organe de commande virtuel s'effectue par holographie dans l'espace.

4. Procédé selon l'une des revendications 1 à 3, **caractérisé en ce que** la projection de l'organe de commande virtuel s'effectue en fonction de la situation.

5. Procédé selon l'une des revendications 1 à 4, **caractérisé en ce que** la projection de l'organe de commande virtuel s'effectue avec une limitation dans le temps.

6. Procédé selon l'une des revendications 1 à 5, **caractérisé en ce que** la détection sans contact d'un mouvement de l'opérateur s'effectue optiquement.

7. Procédé selon la revendication 6, **caractérisé en ce que** la détection sans contact s'effectue dans la plage de l'infrarouge.

8. Procédé selon la revendication 6, **caractérisé en ce que** la détection sans contact s'effectue dans la plage visible.

9. Procédé selon l'une des revendications précédentes, **caractérisé en ce que** l'organe de commande virtuel comprend un bouton de commande simple et/ou un régulateur à coulisse et/ou rotatif.
